# EUROPÄISCHE PATENTSCHRIFT

(11) **EP 0 856 103 B1**
(45) Veröffentlichungstag und Bekanntmachung des Hinweises auf die Patenterteilung: **19.06.2002**
(21) Anmeldenummer: 96930120.9
(22) Anmeldetag: 29.08.1996
(51) Int. Cl.: F02M 35/10

(54) **LUFTANSAUGSYSTEM**
AIR INTAKE SYSTEM
SYSTEME D'ADMISSION D'AIR

(30) Priorität: 18.10.1995 DE 19538605
(43) Veröffentlichungstag der Anmeldung: 05.08.1998
(73) Patentinhaber: FILTERWERK MANN & HUMMEL GmbH, 71631 Ludwigsburg (DE)
(72) Erfinder: KLEINEHAKENKAMP, Norbert, D-71287 Weissach (DE); LEIPELT, Rudolf, D-71642 Marbach (DE); MENGELE, Stephan, D-89415 Lauingen (DE)
(74) Vertreter: Voth, Gerhard, Dipl.-Ing.
(86) Internationale Anmeldenummer: EP9603785
(87) Internationale Veröffentlichungsnummer: WO9714885

(56) Entgegenhaltungen:
- DE-A- 4 408 097
- DE-U- 8 715 030
- US-A- 1 922 469
- US-A- 5 195 484
- PATENT ABSTRACTS OF JAPAN vol. 6, no. 236 (M-173), 25.November 1982 & JP,A,57 135256 (NISSAN JIDOSHA), 20.August 1982,

## Beschreibung

Die Erfindung betrifft ein Luftansaugsystem für eine in einem Kraftfahrzeug eingebaute Brennkraftmaschine mit einer Primäransaugleitung nach dem Oberbegriff des Hauptanspruchs. Ein solches Luftansaugsystem ist aus der DE-OS 44 08 097 bekannt. Bei diesem Stand der Technik ist die Primäransaugleitung mit einer Umlenkung versehen, die einen Siphon bildet. Gelangt beispielsweise Wasser in die Primäransaugleitung so sammelt sich dieses im Siphon, erhöht gleichzeitig den Unterdruck im Primäransaugsystem und ermöglicht die Zuführung von Luft über eine Sekundäransaugleitung.

Eine weitere dort gezeigte Variante sieht vor, die Ansaugöffnung der Primäransaugleitung in einer geodätisch tiefen Lage anzuordnen, so daß eventuell eintretendes Wasser lediglich zu einem Verschließen dieser Primäransaugleitung führt und die Luft über die Sekundäransaugleitung zugeführt wird. Bei einem Fahrzeug ist es jedoch nicht immer möglich, diesen Ansaugpunkt zu verlegen. Außerdem ist die tiefe Lage wieder stärker wasserschwall-gefährdet. Bei der zuerst beschriebenen Variante ist zwar eine tiefe Lage des Ansaugpunktes nicht erforderlich, der Siphon, durch welchen die angesaugte Luft geleitet wird, erzeugt jedoch einen gewissen Druckabfall, der im Normalbetrieb der Brennkraftmaschine unerwünscht ist.

Aus der gattungsgemäßen US-A-5195484 ist ein Luftreiniger mit einem Ansaugschnorchel bekannt. Dort ist am Ansaugschnorchel ein Wasserablauf vorgesehen, über welchen Schwallwasser abgeleitet werden kann. Sofern Schwallwasser sich im Ansaugschnorchel befindet, muss die Ansaugluft über einen zweiten Lufteinlass zugeführt werden. Dieser zweite Einlass ist in jedem Betriebszustand geöffnet. Ungeachtet der zweiten Ansaugöffnung ist die erste Ansaugöffnung auch bei Eintritt von Wasser geöffnet.

Der Erfindung liegt die Aufgabe zugrunde, ein Luftansaugsystem mit einer Primäransaugleitung zu schaffen, welches den Eintritt von Wasser in die Brennkraftmaschine zuverlässig verhindert.

Diese Aufgabe wird ausgehend von dem Oberbegriff des Hauptanspruchs durch dessen kennzeichnenden Merkmale gelöst.

Die Lösung der gestellten Aufgabe liegt darin, in der Primäransaugleitung ein Umschaltelement in Form einer Schaltwalze vorzusehen. Diese Schaltwalze kann die Primäransaugleitung verschließen und gibt bei diesem Verschließen gleichzeitig eine Öffnung für die Sekundäransaugleitung, die aus einem wassergeschützten Raum Luft ansaugt, frei. Gleichzeitig bewirkt die Umschaltung eine Freigabe eines Querschnitts, der das die Druckerhöhung verursachende Medium, beispielsweise Wasser, an die Umgebung abgeben kann. Zum Schalten des Umschaltelements ist zweckmäßigerweise ein Stellelement vorgesehen. Dieses wird über einen Sensor, beispielsweise einen Drucksensor aktiviert. Die Sekundärluftansaugung erfolgt mittels einer Ansaugleitung und eines Umschaltelements, z.B. pneumatisches oder elektrisches Stellglied, das Ansaugluft aus einem wassergeschützten Raum ansaugt.

Diese und weitere Merkmale von bevorzugten Weiterbildungen der Erfindung gehen außer aus den Ansprüchen auch aus der Beschreibung und den Zeichnungen hervor.

Ausführungsbeispiele der Erfindung sind in den Zeichnungen dargestellt und werden im folgenden näher erläutert. Die Zeichnungen zeigen:
- Figur 1: ein bekanntes Luftansaugsystem mit einer federbelasteten Klappe,
- Figur 2: ein Luftansaugsystem mit einer Druckbox,
- Figur 3: ein Luftansaugsystem mit einer Verschlußklappe,
- Figur 4: ein Luftansaugsystem mit einer Schaltwalze,
- Figur 5: ein Luftansaugsystem mit einem Abscheideventil.

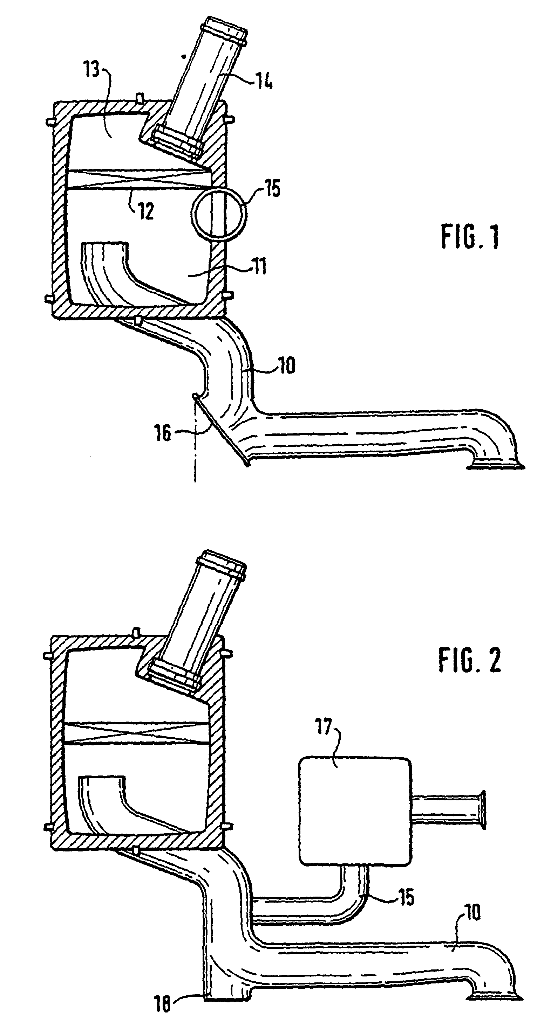

Das Luftansaugsystem gemäß Figur 1 zeigt den Stand der Technik und besteht aus einer Primäransaugleitung 10, welche in einen Rohluftraum 11 führt. In diesem ist ein Filterelement 12 angeordnet. Oberhalb des Filterelements befindet sich der Reinluftraum 13. Von diesem führt die Reinluftleitung 14 zu einer hier nicht dargestellten Brennkraftmaschine. Zu dem Rohluftraum führt ferner eine Sekundäransaugleitung 15. Falls in die Primäransaugleitung 10 Wasser eindringt, erhöht sich der Durchflußwiderstand. Dies führt dazu, daß über die Sekundäransaugleitung die benötigte Luft zugeführt wird. Gleichzeitig öffnet eine federbelastete Klappe 16 und läßt das angesaugte Wasser in einen wasserfreien Raum austreten.

In Figur 2 ist das Luftansaugsystem mit einer Sekundäransaugleitung 15 ausgestattet, welche über eine Druckbox 17 geführt ist. Die Druckbox wird als abstimmbarer Rohrwiderstand dargestellt. Sobald in der Primäransaugleitung 10 eine Druckerhöhung durch Wassereintritt und/oder durch eine Verschlußklappe 19 (nicht gezeigt) stattfindet, wird aufgrund des wesentlich geringeren Druckverlustes im sekundären Ansaugtrakt die benötige Ansaugluft über die Druckbox angesaugt. Das sich in der Primäransaugleitung 10 befindliche Wasser wird über einen Wasserabscheider 18 an die Umgebung abgegeben.

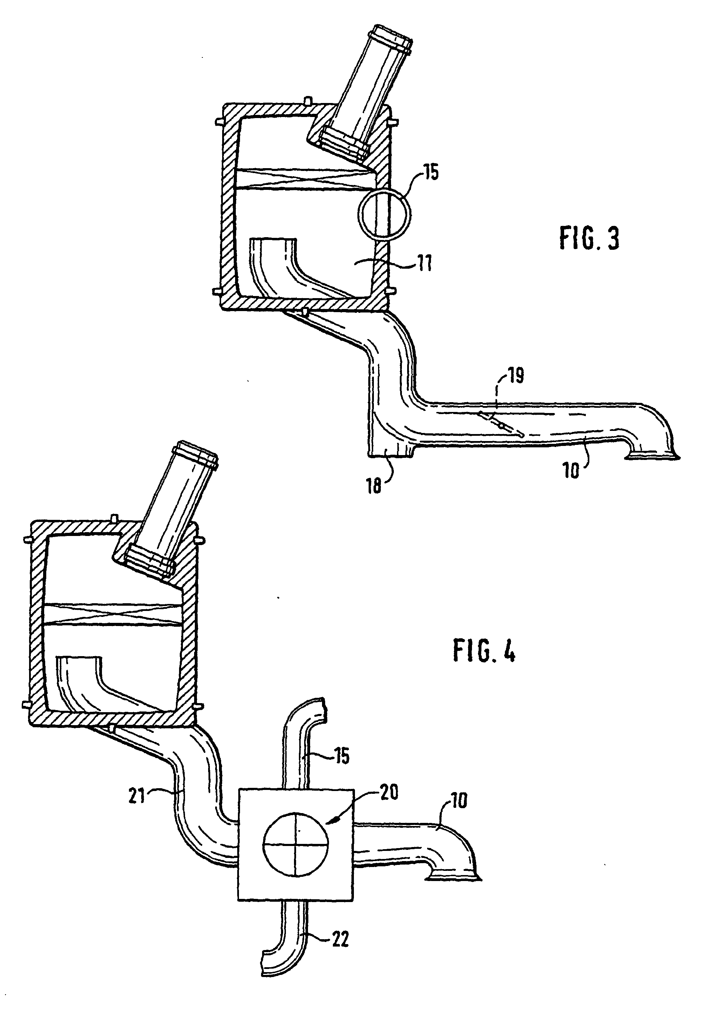

In Figur 3 befindet sich die Sekundäransaugleitung wieder im Bereich des Rohluftraumes 11. Zur Verhinderung des Eintritts von Wasser in den Rohluftraum ist in der Primäransaugleitung 10 eine Verschlußklappe 19 vorgesehen. Sobald Wasser in die Primäransaugleitung 10 eindringt, schließt dieses aufgrund der kinetischen Energie diese Verschlußklappe 19 und verhindert so ein weiteres Vordringen. Die benötigte Luft wird über die Sekundäransaugleitung 15 zugeführt. Auch hier kann in der Primäransaugleitung 10 ein Wasserabscheider 18 vorgesehen sein.

Figur 4 zeigt ein Luftansaugsystem mit einem Schaltelement in Form einer Schaltwalze 20. An dieses Schaltelement ist die Primäransaugleitung 10, die Sekundäransaugleitung 15, die Zuführleitung 21 für die Rohluft und eine Ablauföffnung 22 angeschlossen. Im Normalbetrieb ist die Primäransaugleitung 10 mit der Zuführleitung 21 verbunden. Sobald Wasser in das System eindringt schaltet die Schaltwalze 20 aufgrund der Druckerhöhung um und zwar so, daß über die Sekundäransaugleitung 15 die benötigte Luft angesaugt wird und die Primäransaugleitung 10 mit der Ablauföffnung 22 verbunden wird. Damit kann das angesaugte Wasser abfließen.

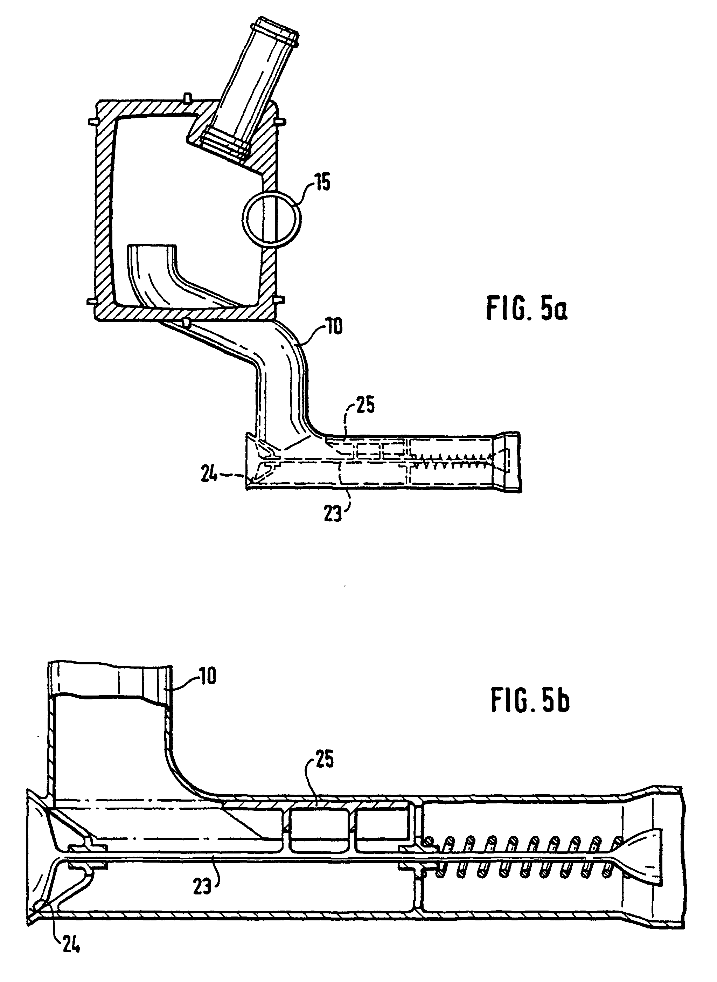

In Figur 5 ist eine Variante der Primäransaugleitung 10 mit einem Ventil dargestellt. Dieses Ventil ist ein Schiebeventil und wird durch die kinetische Energie des eventuell eintretenden Wassers betätigt. Diese kinetische Energie bewirkt ein Verschieben des Ventils 23 entgegen der Kraft einer Ventilfeder nach links. Damit gibt das Ventil die Öffnung 24 frei und das eingetretene Wasser kann abfließen. Gleichzeitig verschließt ein an das Ventil angeformter Schieber 25 den Rohluftkanal. Auch hier sorgt eine Sekundäransaugleitung 15 für die Aufrechterhaltung der Luftzufuhr während des eventuellen Wassereintritts.

## Patentansprüche

1. Luftansaugsystem für eine in einem Kraftfahrzeug eingebaute Brennkraftmaschine mit einer Primäransaugleitung (10) sowie einer bei Erhöhung des Durchflußwiderstandes in der Primäransaugleitung (10) wirksamen Sekundäransaugleitung (15), **dadurch gekennzeichnet, daß** in der Primäransaugleitung (10) ein Umschaltelement (19, 20) vorgesehen ist, welches bei einer Erhöhung des Durchflußwiderstandes die Zuführung von Ansaugluft über eine Sekundäransaugleitung (15) schaltet und gleichzeitig die Primäransaugleitung (10) so verändert, dass die Zuleitung zum Filtergehäuse verschlossen und dafür ein Wasserablauf (18, 22) geöffnet wird.

2. Luftansaugsystem nach Anspruch 1, **dadurch gekennzeichnet, dass** ein Drucksensor zur Ermittlung der Druckdifferenz zwischen Ansaugöffnung und Rohluftraum (11) eines der Ansaugleitung nachgeschalteten Filterelements (12) vorgesehen ist.

3. Luftansaugsystem nach Anspruch 2, **dadurch gekennzeichnet, dass** bei einem Signal des Drucksensors ein Stellelement ein Umschaltelement (20) betätigt.

## Claims

1. Air intake system for an internal combustion engine installed in an automotive vehicle, said system having a primary intake pipe (10) and a secondary intake pipe (15), which becomes operative if the throughflow resistance in the primary intake pipe (10) increases, **characterised in that** a switch-over element (19, 20) is provided in the primary intake pipe (10), which element switches the supply of intake air via a secondary intake pipe (15) if the throughflow resistance increases, and said element simultaneously changes the primary intake pipe (10) in such a manner that the supply pipe to the filter housing is closed, and a water outlet (18, 22) is opened instead.

2. Air intake system according to claim 1, **characterised in that** a pressure sensor is provided in order to determine the pressure difference between the intake aperture and the unfiltered air chamber (11) of a filter element (12) connected to the outlet side of the intake pipe.

3. Air intake system according to claim 2, **characterised in that**, on a signal from the pressure sensor, a control element actuates a switch-over element (20).

## Revendications

1. Système d'admission d'air pour moteur à explosion monté dans un véhicule automobile, comprenant une conduite d'admission primaire (10) ainsi qu'une conduite d'admission secondaire (15) intervenant quand la résistance à l'écoulement s'accroît dans la conduite primaire (10)
**caractérisé en ce que**
dans la conduite primaire (10) il est prévu un élément de commutation (19, 20) qui commande l'amenée d'air d'admission à travers la conduite secondaire (15) quand la résistance à l'écoulement s'accroît et qui en même temps modifie la conduite d'admission primaire (10) de manière que l'accès au boîtier de filtre est fermé et qu'en échange une évacuation d'eau (18, 22) est ouverte.

2. Système d'admission d'air selon la revendication 1,
**caractérisé en ce qu'**
un détecteur de pression est prévu pour déterminer la différence de pression entre l'ouverture d'aspiration et la chambre d'air brut (11) d'un élément filtrant (12) monté en aval de la conduite d'admission.

3. Système d'admission d'air selon la revendication 2,
**caractérisé en ce que**
sur un signal du détecteur de pression, un élément de réglage actionne un élément de commutation (20).
